# EUROPÄISCHE PATENTSCHRIFT

(11) **EP 3 132 535 B1**
(45) Veröffentlichungstag und Bekanntmachung des Hinweises auf die Patenterteilung: **28.08.2019**
(21) Anmeldenummer: 15732610.9
(22) Anmeldetag: 24.06.2015
(51) Int. Cl.: H02P 9/30

(54) **VERSORGUNG EINER SYNCHRONMASCHINE MIT EINEM ERREGERSTROM**
SUPPLY OF A SYNCHRONOUS MOTOR WITH AN EXCITATION CURRENT
ALIMENTATION D'UNE MACHINE SYNCHRONE EN COURANT D'EXCITATION

(30) Priorität: 01.07.2014 EP 14175213
(43) Veröffentlichungstag der Anmeldung: 22.02.2017
(73) Patentinhaber: Siemens Aktiengesellschaft, 80333 München (DE)
(72) Erfinder: MICHELSSON, Olaf, 99310 Arnstadt (DE); BANDA, Marcus, 99084 Erfurt (DE); HILLER, Martin, 99097 Erfurt (DE)
(86) Internationale Anmeldenummer: PCT/EP2015/064199
(87) Internationale Veröffentlichungsnummer: WO 2016/001024

(56) Entgegenhaltungen:
- EP-A1- 0 254 129
- EP-A1- 2 262 101
- WO-A1-2013/079761
- DE-A1- 2 366 003
- DE-A1-102010 060 998
- US-A1- 2012 153 904

## Beschreibung

Die Erfindung betrifft ein Erregersystem zum Versorgen von wenigstens einer Erregerwicklung eines Läufers einer Synchronmaschine, insbesondere eines Turbogenerators, mit einem Erregerstrom.

Des Weiteren betrifft die Erfindung ein bürstenloses Erregersystem zum Versorgen von wenigstens einer Erregerwicklung eines Läufers einer Synchronmaschine, insbesondere eines Turbogenerators, mit einem Erregerstrom.

Ferner betrifft die Erfindung ein Verfahren zum Versorgen von wenigstens einer Erregerwicklung eines Läufers einer Synchronmaschine, insbesondere eines Turbogenerators, mit einem Erregerstrom.

Synchronmaschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder Dampfturbine gekoppelt, wobei der Turbogenerator zusammen mit der Gasturbine bzw. Dampfturbine einen Turbosatz bildet. Alternativ kann eine Synchronmaschine ohne eine entsprechende Kopplung an eine Turbine in einem Phasenschieberbetrieb betrieben werden.

Bei einem Turbogenerator wird ein für die Erzeugung einer Generatorspannung erforderliches magnetisches Erregergleichfeld durch Erregerwicklungen im Läufer des Turbogenerators erzeugt.

Zur Versorgung der Erregerwicklungen eines Läufers eines Turbogenerators kann ein statisches Erregersystem eingesetzt werden. Bei einem statischen Erregersystem wird über einen stationären Stromrichter, stationäre Kohlebürsten und an einer Läuferwelle des Turbogenerators angeordneten Schleifringen eine Erregerleistung zu den Erregerwicklungen des Läufers des Turbogenerators übertragen. Diese statische Erregung kann sehr schnell auf Lastwechsel reagieren, was mit einem regelungstechnischen Geschwindigkeitsvorteil gegenüber bürstenlosen Erregersystemen einhergeht. Dieser regelungstechnischen Geschwindigkeitsvorteil kommt heute stark zum Tragen, da sich im Zuge einer globalen Energiewende die Einspeiseeinheiten von Großkraftwerken zum Einspeisen von elektrischer Energie in Versorgungsnetze hin zu kleineren dezentralen regenerativen Energieerzeugern verändern und somit mehr Dynamik in den Versorgungsnetzen generieren. Jedoch gilt ein statisches Erregersystem aufgrund eines regelmäßig notwendigen Austauschs der Kohlebürsten als wartungsintensiv. Weiterhin wird die Versorgungsspannung eines statischen Erregersystems vorwiegend von den Generatorklemmen abgenommen, so dass während eines Netzfehlers im ungünstigsten Fall keine Deckenspannung an die Erregerwicklungen des Turbogenerators geliefert werden kann.

Alternativ kann zur Versorgung der Erregerwicklungen eines Turbogenerators ein bürstenloses Erregersystem eingesetzt werden. Bei einem bürstenlosen Erregersystem werden die Erregerwicklungen des Läufers des Turbogenerators über einen mit dem Läufer mitrotierenden Diodengleichrichter mit den Wechselstromwicklungen eines Läufers einer als Außenpolmaschine ausgebildeten Haupterregermaschine verbunden. Die Außenpolwicklungen der Haupterregermaschine werden über einen Spannungsregler aus einer permanenterregten Hilfserregermaschine gespeist. Auf den wartungsintensiven Einsatz von Bürsten kann völlig verzichtet werden, wodurch ein bürstenloses Erregersystem als nahezu wartungsfrei gilt. Zudem ist eine bürstenlose Erregung im Gegensatz zur statischen Erregung in der Lage, im Fall eines Netzfehlers in einem Versorgungsnetz weiterhin die volle Leistung an die Erregerwicklungen des Läufers eines Turbogenerators zu liefern. Ein Nachführen eines die Erregerwicklungen des Läufers eines Turbogenerators versorgenden Erregerstroms bei schnellen Laständerungen im ange schlossenen Versorgungsnetz erfolgt im Vergleich zur statischen Erregung aufgrund der großen Erregerzeitkonstante eines bürstenlosen Erregersystems sehr viel langsamer. Den durch den starken Zuwachs regenerativer Energieerzeuger in den Versorgungsnetzen bedingten stetig steigenden Minimalanforderungen der Netzbetreiber an alle Einspeiseeinheiten bezüglich einer Dynamik bei Lastwechseln, der Spannungshaltung im Versorgungsnetz sowie bei kurzzeitigen Störungen werden Turbogeneratoren mit bürstenloser Erregung immer weniger gerecht. Die von einer Erregermaschine erzeugte Erregerleistung beträgt üblicherweise etwa 0,5% bis etwa 5% der Bemessungsscheinleistung eines Turbogenerators.

In der WO 2013/079761 A1 ist eine elektrische Rotationsmaschine und ein Verfahren zum Magnetisieren eines Läufers einer bürstenlosen Rotationsmaschine gezeigt, wobei das Verfahren das Ausbilden eines statischen magnetischen Felds, das Rotieren des Läufers einer Erregermaschine in dem statischen magnetischen Feld zum Erzeugen eines Wechselstroms, das Gleichrichten des Wechselstroms mittels einer steuerbaren, an dem Rotor angeordneten Brücke, das kabellose Empfangen von Steuerungsinformationen in dem Rotor, das Kontrollieren einer Stromstärke mit Hilfe der steuerbaren Brücke auf Basis der Steuerungsinformationen und das Einspeisen des Stroms in eine Magnetisierungswindung der elektrischen Rotationsmaschine umfasst.

In DE 23 66 003 A1 ist eine Anordnung für eine rotierende Halbleiterregung bei Turbogeneratoren gezeigt, bei der wenigstens ein Stromrichterrad vorgesehen ist, dessen Trägerscheibe als mit der Welle drehfest verbundene Nabe mit einem sich axial erstreckenden hohlzylindrischen Ansatz ausgebildet ist. Im Innendurchmesser des Ansatzes sind Halbleiter-Bausteine mit Kühlkörpern und Schutzbeschaltung angeordnet. Weiterhin sind als Halbleiterventile gesteuerte Thyristoren vorgesehen, und die Trägerscheibe des Stromrichterrades weist einen weiteren, dem genannten hohlzylindrischen Ansatz gegenüberliegenden hohlzylindrischen Ansatz auf, an dessen Innendurchmesser die Ansteuereinheiten für die Thyristoren isoliert angeordnet sind. Am Außenmantel der Trägerscheibe ist der rotierende Teil einer kontakt- und berührungslosen Signalübertragungseinrichtung angebracht, deren feststehender Teil im Maschinengehäuse befestigt ist.

Die DE 10 2010 060 998 A1 zeigt einen bürstenlosen Synchrongenerator mit einem Stator mit mindestens einer Hauptwicklung und mindestens einer Hilfswicklung zum Erzeugen eines Erregerfeldes und mit einem Rotor mit einer Haupterregerwicklung in Schenkelpolgeometrie. Der Synchrongenerator zeichnet sich dadurch aus, dass der Rotor weiterhin eine Hilfserregerwicklung in Vollpolgeometrie aufweist, die mit der Haupterregerwicklung auf einen gemeinsamen Anker aufgebracht ist und mit dieser über eine am Rotor angeordnete Gleichrichterbrücke verbunden ist. In einer Generatoranordnung mit einem solchen bürstenlosen Synchrongenerator ist mindestens ein Kondensator vorgesehen, der mit der Hilfswicklung des Stators einen Schwingkreis bildet.

EP 2 262 101 A1 zeigt eine Anordnung mit einem elektrischen Generator sowie einer Dampfturbine und eine Erregereinrichtung, wobei die Erregereinrichtung derart ausgebildet ist, dass während eines Nennbetriebs die Hilfserregermaschine als permanent erregte Synchronmaschine und einem Turnbetrieb die Hilfserregermaschine als ein Synchronmotor bzw. Turnmotor ausgebildet ist.

In EP 0 254 129 A1 ist ein bürstenloser Synchrongenerator gezeigt, der mit einer konstant erregten Erregermaschine gekuppelt ist, deren Spannung mittels eines Gleichrichters gleichgerichtet und der Erregerwicklung des Synchrongenerators zugeführt ist. Die durch Belastungen hervorgerufenen Spannungsänderungen können in einfacher Weise dadurch ausgeregelt werden, dass im Luftspalt des Synchrongenerators ein Hallsensor angeordnet ist, dessen Hallspannung zur Steuerung des Erregerstroms des Synchrongenerators dient.

US 2012/153904 A1 zeigt einen Generator mit einer Feldspule, die ein magnetisches Feld erzeugt, welches Elektrizität in einer Spulenanordnung induziert. Ein Feldspulenerregersystem weist einen Generator mit einer Ausgangsspulenanordnung zum Erzeugen von Wechselspannung auf. Ein Gleichrichter konvertiert die Wechselspannung an zwei Knoten in Gleichspannung. Ein Kondensator zwischen den Knoten bildet eine Resonanzschaltung aus, wodurch Spannung und Strom mit vorgegebener Phasenverschiebung oszillieren. Ein Schalter und die Feldspule sind zwischen den Knoten in Reihe geschaltet. Eine Steuerungseinheit schaltet den Schalter für eine vorgegebene Zeitspanne auf leitend. Der Schalter wird nichtleitend durch das erste Auftreten eines minimalen Stroms nach dem Ende der Zeitspanne. Die vorgegebene Phasenverschiebung ermöglicht es, den Minimalstrom zu detektieren.

Aufgabe der Erfindung ist es, die Vorteile der statischen Erregung mit den Vorteilen der bürstenlosen Erregung zu verbinden.

Die erfindungsgemäße Regeleinrichtung für ein bürstenloses Erregersystem zum Versorgen von wenigstens einer Erregerwicklung eines Läufers einer Synchronmaschine, insbesondere eines Turbogenerators, mit einem Erregerstrom, umfasst:
- wenigstens eine zum Erfassen einer Stärke eines zwischen einem Läufer und einem Ständer einer Haupterregermaschine erzeugten magnetischen Flusses oder wenigstens eines mit diesem magnetischen Fluss verbundenen Parameters eingerichtete Erfassungseinrichtung;
- wenigstens eine zwischen eine Hilfserregermaschine und die Haupterregermaschine schaltbare Regeleinheit, die zum Erzeugen eines der Haupterregermaschine zuführbaren Hilfserregergleichstroms durch Gleichrichten eines von der Hilfserregermaschine erzeugten Hilfserregerdrehstroms eingerichtet ist und die eingerichtet ist, die Stromstärke des Hilfserregergleichstroms derart zu regeln, dass ein zwischen dem Läufer und dem Ständer der Haupterregermaschine erzeugter magnetischer Fluss unabhängig von der Stromstärke des der Erregerwicklung des Läufers der Synchronmaschine zuführbaren Erregerstroms konstant gehalten wird; und
- wenigstens eine drehfest mit einer Läuferwelle der Synchronmaschine verbundene, zwischen den Läufer der Haupterregermaschine und die Erregerwicklung des Läufers der Synchronmaschine geschaltete Stelleinheit, die zum Erzeugen des Erregerstroms durch Gleichrichten einer von der Haupterregermaschine erzeugten Erregerdrehspannung und zum Regeln der Stromstärke des dem Läufer der Synchronmaschine zuführbaren Erregerstroms eingerichtet ist.

Ein mit einer erfindungsgemäßen Regeleinrichtung versehenes bürstenloses Erregersystem kann aufgrund der Stelleinheit bzw. der dadurch bewirkten indirekten Regelung der Stromstärke des dem Läufer der Synchronmaschine zuführbaren Erregerstroms entsprechend statischen Erregersystemen sehr schnell auf Lastwechsel reagieren, was mit dem regelungstechnischen Geschwindigkeitsvorteil verbunden ist. Hierzu muss eine aktive Gleichrichtung auf der Läuferwelle implementiert sein. Insbesondere können mittels der Stelleinheit positive und negative Erregerspannungen erzeugt werden, wobei mittels negativer Erregerspannungen eine schnelle Entregung der Erregerwicklung des Läufers der Synchronmaschine erfolgen kann. Hierdurch kann das Konzept der bürstenlosen Erregung erheblich erweitert und verbessert werden. Mit der erfindungsgemäßen Regeleinrichtung kann folglich ein Regelverhalten und eine Stabilität einer Synchronmaschine verbessert werden, um im Allgemeinen gestiegene Minimalanforderungen der Netzbetreiber an mit einem Versorgungsnetz verbundene Einspeiseeinheiten zu erfüllen, wodurch eine globale Energiewende unterstützt werden kann.

Eine Minimalanforderung an Einspeiseeinheiten ist beispielsweise eine Forderung bezüglich Referenz-Spannungssprüngen im Leerlauf einer Synchronmaschine von 1 pu auf 0,9 pu innerhalb von oftmals beschriebenen 800 ms für bürstenlose Erregeranlagen bei niedrigen Temperaturen. Ohne eine aktive Entregung einer Synchronmaschine bzw. der Erregerwicklung ihres Läufers, wie es bei herkömmlichen bürstenlosen Erregersystemen der Fall ist, sind derartige Forderungen für große luftgekühlte Synchronmaschinen kaum realisierbar. Mittels der erfindungsgemäßen Regeleinrichtung kann hingegen eine geeignete Entregung der Synchronmaschine erfolgen. Im Falle von plötzlichen Lastabsenkungen in einem Versorgungsnetz ist es zudem erforderlich, eine entstehende Überspannung möglichst schnell auszuregeln, was mittels der Stelleinheit der erfindungsgemäßen Regeleinrichtung möglich ist. Zudem ist es notwendig, zur Erhaltung der Stabilität einer Synchronmaschine während eines Netzfehlers im Versorgungsnetz eine Synchronmaschine im Moment der Netzspannungsrückkehr nach entsprechenden Minimalanforderungen der Netzbetreiber an Einspeiseeinheiten in 200 ms bis 250 ms in maximaler Überregung zu fahren, was ebenfalls mittels der erfindungsgemäßen Regeleinrichtung bzw. deren Stelleinheit möglich ist. Um möglichst schnell in diesen Zustand der maximalen Überregung zu gelangen, bedarf es einer möglichst kleinen Erregerzeitkonstante, welche durch eine Verwendung der erfindungsgemäßen Regeleinrichtung erreicht werden kann.

Durch den erfindungsgemäßen Einsatz der Stelleinheit bzw. deren Funktionalitäten - statt der herkömmlichen Verwendung von passiven bzw. nicht steuerbaren Gleichrichtereinheiten in Kombination mit einer direkt über eine Bestromung einer Haupterregermaschine erfolgenden Erregung einer Erregerwicklung des Läufers einer Synchronmaschine - ist es für eine Regelung der Stromstärke des dem Läufer der Synchronmaschine zuführbaren Erregerstroms von Vorteil, wenn eine von der Haupterregermaschine erzeugte Erregerdrehspannung eine konstante Höhe aufweist. Dies kann mittels der Regeleinheit der erfindungsgemäßen Regeleinrichtung erreicht werden, mit der hierzu die Stromstärke des der Haupterregermaschine zuführbaren Hilfserregergleichstroms derart geregelt wird, dass ein zwischen dem Läufer und dem Ständer der Haupterregermaschine erzeugter magnetischer Fluss unabhängig von der Stromstärke des der Erregerwicklung des Läufers der Synchronmaschine zuführbaren Erregerstroms konstant gehalten wird. Durch das Konstanthalten des magnetischen Flusses wird die Höhe der von der Haupterregermaschine erzeugten Erregerdrehspannung konstant gehalten.

Mittels der erfindungsgemäßen Regeleinrichtung können die herkömmlichen Vorteile der bürstenlosen Erregung somit mit den Vorteilen einer statischen Erregung, insbesondere deren Regelungsvorteilen, verbunden werden.

Die Erfassungseinrichtung kann direkt die Stärke des magnetischen Flusses zwischen dem Läufer und dem Ständer einer Haupterregermaschine messen. Alternativ kann mittels der Erfassungseinrichtung wenigstens ein mit diesem magnetischen Fluss verbundener Parameters erfasst werden, welcher einen Rückschluss auf die jeweilige Stärke des magnetischen Flusses zwischen dem Läufer und dem Ständer der Haupterregermaschine zulässt. Es können auch zwei oder mehrere entsprechende Erfassungseinrichtungen vorhanden sein.

Zum Regeln der Stromstärke des dem Läufer der Synchronmaschine zuführbaren Erregerstroms kann die Stelleinheit kommunikationstechnisch mit einer Regelelektronik verbunden sein, welche einen Ist-Stromstärke eines von der Synchronmaschine erzeugten Drehstroms mit einer vorgegebenen Soll-Stromstärke vergleicht, um eine Regelung der Stromstärke des dem Läufer der Synchronmaschine zuführbaren Erregerstroms durchzuführen. Alternativ kann die Stelleinheit selbst eine entsprechende Regelelektronik umfassen.

Bevorzugt weist die Stelleinheit wenigstens eine steuerbare Gleichrichtereinheit auf. Mittels einer solchen steuerbaren Gleichrichtereinheit kann sowohl die Gleichrichtung der von der Haupterregermaschine erzeugten Erregerdrehspannung als auch die Regelung der Stromstärke des dem Läufer der Synchronmaschine zuführbaren Erregerstroms vorgenommen werden. Hierzu kann die steuerbare Gleichrichtereinheit steuerbare Gleichrichter aufweisen.

Das erfindungsgemäße bürstenlose Erregersystem zum Versorgen von wenigstens einer Erregerwicklung eines Läufers einer Synchronmaschine, insbesondere eines Turbogenerators, mit einem Erregerstrom, umfasst:
- wenigstens eine als rotierende elektrische Außenpolmaschine ausgebildete Haupterregermaschine, die einen drehfest mit einer Läuferwelle der Synchronmaschine verbundenen Läufer mit Läuferwicklungen und einen Ständer mit Außenpolwicklungen aufweist, wobei die Läuferwicklungen elektrisch leitend mit der Erregerwicklung des Läufers der Synchronmaschine verbindbar sind;
- wenigstens eine als permanenterregte elektrische Innenpolmaschine ausgebildete Hilfserregermaschine, die einen drehfest mit der Läuferwelle der Synchronmaschine verbundenen Läufer mit Permanentmagneten und einen Ständer mit Ständerwicklungen aufweist, wobei die Ständerwicklungen elektrisch leitend mit den Außenpolwicklungen der Haupterregermaschine verbindbar sind; und
- wenigstens eine Regeleinrichtung gemäß einer der vorgenannten Ausgestaltungen oder einer beliebigen Kombination derselben.

Mit dem bürstenlosen Erregersystem sind die oben mit Bezug auf die Regeleinrichtung genannten Vorteile und Ausführungsformen entsprechend verbunden. Die Läuferwicklungen der Haupterregermaschine sind über die drehfest mit der Läuferwelle der Synchronmaschine verbundene Stelleinheit, insbesondere einen mitrotierenden Gleichrichter, elektrisch leitend mit der Erregerwicklung des Läufers der Synchronmaschine verbindbar. Die Ständerwicklungen der Hilfserregermaschine sind über ein Stellglied elektrisch leitend mit den Außenpolwicklungen der Haupterregermaschine verbindbar.

Das erfindungsgemäße Verfahren zum Versorgen von wenigstens einer Erregerwicklung eines Läufers einer Synchronmaschine, insbesondere eines Turbogenerators, mit einem Erregerstrom, umfasst die Schritte gemäss dem Anspruch 4.

Als Stelleinheit wird bevorzugt wenigstens eine steuerbare Gleichrichtereinheit verwendet. Mittels einer solchen steuerbaren Gleichrichtereinheit kann sowohl die Gleichrichtung der von der Haupterregermaschine erzeugten Erregerdrehspannung als auch die Regelung der Stromstärke des dem Läufer der Synchronmaschine zuführbaren Erregerstroms vorgenommen werden. Hierzu kann die steuerbare Gleichrichtereinheit steuerbare Gleichrichter aufweisen.

Erfindungsgemäss wird die konstante Erregerdrehspannung durch eine Regelung einer Versorgung der Haupterregermaschine mit einem von einer Hilfserregermaschine generierten, gleichgerichteten Hilfserregerdrehstrom erzeugt. Dies impliziert einen konstanten magnetischen Fluss zwischen dem Läufer und der Ständer der Haupterregermaschine.

Im Folgenden werden bevorzugte Ausführungsformen des erfindungsgemäßen bürstenlosen Erregersystems anhand der beigefügten schematischen Zeichnungen erläutert. Es zeigen:
- Fig. 1: eine schematische Darstellung eines mit einem Turbogenerator kombinierten herkömmlichen bürstenlosen Erregersystems;
- Fig. 2: eine schematische Darstellung eines Ausführungsbeispiels für ein mit einer Synchronmaschine kombiniertes erfindungsgemäßes bürstenloses Erregersystem; und
- Fig. 3: eine schematische und perspektivische Darstellung einer Haupterregermaschine eines Ausführungsbeispiels für ein erfindungsgemäßes bürstenloses Erregersystem.

In den Figuren sind funktionsgleiche Bauteile mit denselben Bezugszeichen versehen.

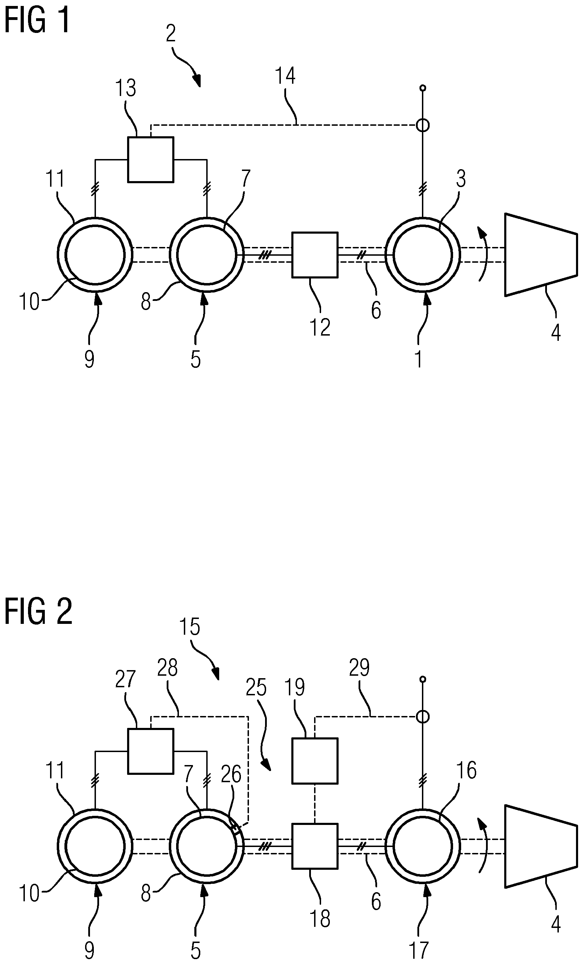

Figur 1 zeigt eine schematische Darstellung eines mit einem Turbogenerator 1 kombinierten herkömmlichen bürstenlosen Erregersystems 2 zum Versorgen von wenigstens einer nicht gezeigten Erregerwicklung eines Läufers 3 des Turbogenerators 1 mit einem Erregerstrom. Der Turbogenerator 1 ist mit einer Turbine 4 zu einem Turbosatz kombiniert.

Das Erregersystem 2 umfasst eine als rotierende elektrische Außenpolmaschine ausgebildete Haupterregermaschine 5, die einen drehfest mit einer Läuferwelle 6 des Turbogenerators 1 verbundenen Läufer 7 mit nicht gezeigten Läuferwicklungen und einen Ständer 8 mit nicht gezeigten Außenpolwicklungen aufweist, wobei die Läuferwicklungen elektrisch leitend mit der Erregerwicklung des Läufers 3 des Turbogenerators 1 verbindbar sind.

Des Weiteren umfasst das Erregersystem 2 eine als permanenterregte elektrische Innenpolmaschine ausgebildete Hilfserregermaschine 9, die einen drehfest mit der Läuferwelle 6 des Turbogenerators 1 verbundenen Läufer 10 mit nicht gezeigten Permanentmagneten und einen Ständer 11 mit nicht gezeigten Ständerwicklungen aufweist, wobei die Ständerwicklungen elektrisch leitend mit den Außenpolwicklungen des Ständers 8 der Haupterregermaschine 5 verbindbar sind.

Das Erregersystem 2 umfasst zudem eine drehfest mit der Läuferwelle 6 verbundene, zwischen die Läuferwicklungen des Läufers 7 der Haupterregermaschine 5 und die Erregerwicklung des Läufers 3 des Turbogenerators 1 geschaltete, zum nicht steuerbaren bzw. passiven Gleichrichten einer von der Haupterregermaschine 5 erzeugten Drehspannung eingerichtete Gleichrichtereinheit 12. Die Gleichrichtereinheit 12 weist hierzu nicht steuerbare, nicht gezeigte Gleichrichter in Form von miteinander verschalteten Dioden auf.

Die Hilfserregermaschine 9 erzeugt einen Hilfserregerdrehstrom, dessen Stromstärke mittels eines Reglers 13 geregelt und gleichgerichtet wird, um der Haupterregermaschine 5 bzw. deren Außenpolwicklungen einen Hilfserregergleichstrom zuzuführen. Der Regler 13 regelt die Stromstärke des der Haupterregermaschine 5 zuzuführenden Hilfserregergleichstroms und hierdurch die Stromstärke des den Erregerwicklungen des Läufers 3 des Turbogenerators 1 zuzuführenden Erregerstroms in Abhängigkeit eines von dem Turbogenerator 1 zu erzeugenden Drehstroms, was durch die gestrichelte Linie 14 in Figur 1 angedeutet sein soll.

Figur 2 zeigt eine schematische Darstellung eines Ausführungsbeispiels für ein erfindungsgemäßes bürstenloses Erregersystem 15 zum Versorgen von wenigstens einer nicht gezeigten Erregerwicklung eines Läufers 16 einer Synchronmaschine 17 mit einem Erregerstrom. Die Synchronmaschine 17 ist mit einer Turbine 4 zu einem Turbosatz kombiniert.

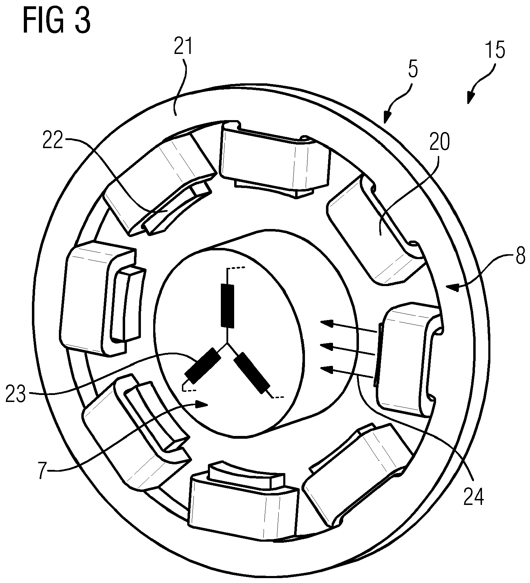

Das bürstenlose Erregersystem 15 umfasst eine als rotierende elektrische Außenpolmaschine ausgebildete Haupterregermaschine 5, die einen drehfest mit einer Läuferwelle 6 der Synchronmaschine 17 verbundenen Läufer 7 mit nicht gezeigten Läuferwicklungen und einen Ständer 8 mit nicht gezeigten Außenpolwicklungen aufweist. Die Läuferwicklungen sind elektrisch leitend mit der Erregerwicklung des Läufers 16 der Synchronmaschine 17 verbindbar. Eine beispielhafte Ausführungsform einer Haupterregermaschine 5 ist in Figur 3 gezeigt.

Des Weiteren umfasst das bürstenlose Erregersystem 15 eine als permanenterregte elektrische Innenpolmaschine ausgebildete Hilfserregermaschine 9, die einen drehfest mit der Läuferwelle 6 der Synchronmaschine 17 verbundenen Läufer 10 mit nicht gezeigten Permanentmagneten und einen Ständer 11 mit nicht gezeigten Ständerwicklungen aufweist. Die Ständerwicklungen sind elektrisch leitend mit den Außenpolwicklungen der Haupterregermaschine 5 verbindbar.

Ferner umfasst das bürstenlose Erregersystem 15 eine Regeleinrichtung 25.

Die Regeleinrichtung 25 umfasst eine zum Erfassen einer Stärke eines zwischen dem Läufer 7 und dem Ständer 8 der Haupterregermaschine 5 erzeugten magnetischen Flusses oder eines mit diesem magnetischen Fluss verbundenen Parameters eingerichtete Erfassungseinrichtung 26.

Des Weiteren umfasst die Regeleinrichtung 25 eine zwischen die Hilfserregermaschine 9 und die Haupterregermaschine 5 geschaltete Regeleinheit 27, die zum Erzeugen eines der Haupterregermaschine 5 zuführbaren Hilfserregergleichstroms durch Gleichrichten eines von der Hilfserregermaschine 9 erzeugten Hilfserregerdrehstroms eingerichtet ist und die eingerichtet ist, die Stromstärke des Hilfserregergleichstroms derart zu regeln, dass ein zwischen dem Läufer 7 und dem Ständer 8 der Haupterregermaschine 5 erzeugter magnetischer Fluss unabhängig von der Stromstärke des der Erregerwicklung des Läufers 16 der Synchronmaschine 17 zuführbaren Erregerstroms konstant gehalten wird.

Ferner umfasst die Regeleinrichtung 25 eine drehfest mit der Läuferwelle 6 der Synchronmaschine 17 verbundene, zwischen den Läufer 7 der Haupterregermaschine 5 und die Erregerwicklung des Läufers 16 der Synchronmaschine 17 geschaltete Stelleinheit 18, die zum Erzeugen des Erregerstroms durch Gleichrichten einer von der Haupterregermaschine 5 erzeugten Erregerdrehspannung und zum Regeln der Stromstärke des dem Läufer 16 der Synchronmaschine 17 zuführbaren Erregerstroms eingerichtet ist. Hierzu ist die Stelleinheit 18 kommunikationstechnisch mit einer Regelelektronik 19 verbunden. Die Stelleinheit 18 umfasst wenigstens eine nicht gezeigte steuerbare Gleichrichtereinheit.

Die Hilfserregermaschine 9 erzeugt einen Hilfserregerdrehstrom, welcher mittels der Regeleinheit 27 geregelt und gleichgerichtet wird, um der Haupterregermaschine 5 bzw. deren Außenpolwicklungen einen Gleichstrom zuzuführen. Die Regeleinheit 27 regelt die Stromstärke eines der Haupterregermaschine 5 zuführbaren Hilfserregergleichstroms in Abhängigkeit der Stärke eines von der Erfassungseinrichtung 26 erfassten magnetischen Flusses zwischen dem Läufer 7 und dem Ständer 8 der Haupterregermaschine 5, was durch die gestrichelte Linie 28 angedeutet sein soll. Die Regelelektronik 19 steuert die Stelleinheit 18 in Abhängigkeit der Stromstärke eines von der Synchronmaschine 17 zu erzeugenden Drehstroms an, was durch die gestrichelte Linie 29 in Figur 2 angedeutet sein soll.

Figur 3 zeigt eine schematische und perspektivische Darstellung einer Haupterregermaschine 5 eines Ausführungsbeispiels für ein erfindungsgemäßes bürstenloses Erregersystem 15. Der Ständer 8 der Haupterregermaschine 5 umfasst acht Außenpolwicklungen 20, welche über einen gemeinsamen, kreisringförmig ausgebildeten Eisenkörper 21 verbunden sind, wozu an dem Eisenkörper 21 radial nach innen verlaufende Vorsprünge 22 ausgebildet sind, welche durch die Außenpolwicklungen 20 greifen. Die Haupterregermaschine 5 weist zudem einen Läufer 7 mit drei durch ihre Induktivitäten angedeuteten Läuferwicklungen 23 auf. Beim Betrieb des Erregersystems 15 wird in der Haupterregermaschine 5 zwischen den Außenpolwicklungen 20 und den Läuferwicklungen 23 ein Magnetfeld erzeugt, welches durch die Pfeile 24 angedeutet ist. Mit einem erfindungsgemäßen Erregersystem 15 kann der mit diesem Magnetfeld zusammenhängende magnetische Fluss unabhängig von einer Stromstärke des der Erregerwicklung des Läufers 16 der Synchronmaschine 17 zuzuführenden Erregerstroms konstant gehalten werden.

Obwohl die Erfindung im Detail durch die bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Regeleinrichtung (25) für ein bürstenloses Erregersystem (15) zum Versorgen von wenigstens einer Erregerwicklung eines Läufers (16) einer Synchronmaschine (17), insbesondere eines Turbogenerators, mit einem Erregerstrom, aufweisend:
- wenigstens eine zum Erfassen einer Stärke eines zwischen einem Läufer (7) und einem Ständer (8) einer Haupterregermaschine (5) erzeugten magnetischen Flusses oder eines mit diesem magnetischen Fluss verbundenen Parameters eingerichtete Erfassungseinrichtung (26);
- wenigstens eine zwischen eine Hilfserregermaschine (9) und die Haupterregermaschine (5) schaltbare Regeleinheit (27), die zum Erzeugen eines der Haupterregermaschine (5) zuführbaren Hilfserregergleichstroms durch Gleichrichten eines von der Hilfserregermaschine (9) erzeugten Hilfserregerdrehstroms eingerichtet ist und die eingerichtet ist, die Stromstärke des Hilfserregergleichstroms derart zu regeln, dass ein zwischen dem Läufer (7) und dem Ständer (8) der Haupterregermaschine (5) erzeugter magnetischer Fluss unabhängig von der Stromstärke des der Erregerwicklung des Läufers (16) der Synchronmaschine (17) zuführbaren Erregerstroms konstant gehalten wird; und
- wenigstens eine drehfest mit einer Läuferwelle (6) der Synchronmaschine (17) verbundene, zwischen den Läufer (7) der Haupterregermaschine (5) und die Erregerwicklung des Läufers (16) der Synchronmaschine (17) geschaltete Stelleinheit (18), die zum Erzeugen des Erregerstroms durch Gleichrichten einer von der Haupterregermaschine (5) erzeugten Erregerdrehspannung und zum Regeln der Stromstärke des dem Läufer (16) der Synchronmaschine (17) zuführbaren Erregerstroms eingerichtet ist.

2. Regeleinrichtung (25) gemäß Anspruch 1,
wobei die Stelleinheit (18) wenigstens eine steuerbare Gleichrichtereinheit aufweist.

3. Bürstenloses Erregersystem (15) zum Versorgen von wenigstens einer Erregerwicklung eines Läufers (16) einer Synchronmaschine (17), insbesondere eines Turbogenerators, mit einem Erregerstrom, aufweisend:
- wenigstens eine als rotierende elektrische Außenpolmaschine ausgebildete Haupterregermaschine (5), die einen drehfest mit einer Läuferwelle (6) der Synchronmaschine (17) verbundenen Läufer (7) mit Läuferwicklungen (23) und einen Ständer (8) mit Außenpolwicklungen (20) aufweist, wobei die Läuferwicklungen (23) elektrisch leitend mit der Erregerwicklung des Läufers (16) der Synchronmaschine (17) verbindbar sind;
- wenigstens eine als permanenterregte elektrische Innenpolmaschine ausgebildete Hilfserregermaschine (9), die einen drehfest mit der Läuferwelle (6) der Synchronmaschine (17) verbundenen Läufer (10) mit Permanentmagneten und einen Ständer (11) mit Ständerwicklungen aufweist, wobei die Ständerwicklungen elektrisch leitend mit den Außenpolwicklungen (20) der Haupterregermaschine (5) verbindbar sind; und
- wenigstens eine Regeleinrichtung (25) gemäß Anspruch 1 oder 2.

4. Verfahren zum Versorgen von wenigstens einer Erregerwicklung eines Läufers (16) einer Synchronmaschine (17), insbesondere eines Turbogenerators, mit einem Erregerstrom, aufweisend die Schritte:
- Erzeugen einer konstanten Erregerdrehspannung mittels einer Haupterregermaschine (5), deren Läufer (7) drehfest mit dem Läufer (16) der Synchronmaschine (17) verbunden ist;
- Erzeugen des Erregerstroms durch Gleichrichten der konstanten Erregerdrehspannung mittels einer Stelleinheit (18), die drehfest mit dem Läufer (16) der Synchronmaschine (17) verbunden ist; und
- Regeln der Stromstärke des Erregerstroms mittels der Stelleinheit (18),
wobei die konstante Erregerdrehspannung durch eine Regelung einer Versorgung der Haupterregermaschine (5) mit einem von einer Hilfserregermaschine (9) generierten, gleichgerichteten Hilfserregerdrehstrom erzeugt wird, wobei wenigstens eine zwischen die Hilfserregermaschine (9) und die Haupterregermaschine (5) schaltbare Regeleinheit (27), die zum Erzeugen eines der Haupterregermaschine (5) zuführbaren Hilfserregergleichstroms durch Gleichrichten des von der Hilfserregermaschine (9) erzeugten Hilfserregerdrehstroms eingerichtet ist und die eingerichtet ist, die Stromstärke des Hilfserregergleichstroms derart zu regeln, dass ein zwischen dem Läufer (7) und dem Ständer (8) der Haupterregermaschine (5) erzeugter magnetischer Fluss unabhängig von der Stromstärke des der Erregerwicklung des Läufers (16) der Synchronmaschine (17) zuführbaren Erregerstroms konstant gehalten wird.

5. Verfahren gemäß Anspruch 4,
wobei als Stelleinheit (18) wenigstens eine steuerbare Gleichrichtereinheit verwendet wird.

## Claims

1. Regulating device (25) for a brushless excitation system (15) for supplying at least one excitation winding of a rotor (16) of a synchronous machine (17), in particular a turbogenerator, with an excitation current, having:
- at least one sensing device (26), designed to sense an intensity of a magnetic flux generated between a rotor (7) and a stator (8) of a main excitation machine (5), or a parameter associated with this magnetic flux;
- at least one regulating unit (27), which can be connected between an auxiliary excitation machine (9) and the main excitation machine (5), and which is designed to generate an auxiliary excitation direct current that can be supplied to the main excitation machine (5) by rectifying an auxiliary excitation three-phase current generated by the auxiliary excitation machine (9), and which is designed to regulate the current intensity of the auxiliary excitation direct current in such a manner that a magnetic flux generated between the rotor (7) and the stator (8) of the main excitation machine (5) is kept constant independently of the current intensity of the excitation current that can be supplied to the excitation winding of the rotor (16) of the synchronous machine (17); and
- at least one adjusting unit (18), which is connected in a rotationally fixed manner to a rotor shaft (6) of the synchronous machine (17), is connected between the rotor (7) of the main excitation machine (5) and the excitation winding of the rotor (16) of the synchronous machine (17), and is designed to generate the excitation current by rectifying an excitation three-phase voltage generated by the main excitation machine (5) and to regulate the current intensity of the excitation current that can be supplied to the rotor (16) of the synchronous machine (17) .

2. Regulating device (25) according to Claim 1,
wherein the adjusting unit (18) has at least one controllable rectifier unit.

3. Brushless excitation system (15) for supplying at least one excitation winding of a rotor (16) a synchronous machine (17), in particular a turbogenerator, with an excitation current, having:
- at least one main excitation machine (5), realized as a rotating electrical external-pole machine, which has a rotor (7), having rotor windings (23), that is connected in a rotationally fixed manner to a rotor shaft (6) of the synchronous machine (17), and which has a stator (8) having external-pole windings (20), wherein the rotor windings (23) can be connected in an electrically conducting manner to the excitation winding of the rotor (16) of the synchronous machine (17);
- at least one auxiliary excitation machine (9), realized as a permanently excited electrical internal-pole machine, which has a rotor (10), having permanent magnets, that is connected in a rotationally fixed manner to the rotor shaft (6) of the synchronous machine (17), and which has a stator (11) having stator windings, wherein the stator windings can be connected in an electrically conducting manner to the external-pole windings (20) of the main excitation machine (5); and
- at least one regulating device (25) according to Claim 1 or 2.

4. Method for supplying at least one excitation winding of a rotor (16) of a synchronous machine (17), in particular a turbogenerator, with an excitation current, having the steps:
- generating a constant excitation three-phase voltage by means of a main excitation machine (5), of which the rotor (7) is connected in a rotationally fixed manner to the rotor (16) of the synchronous machine (17);
- generating the excitation current by rectifying the constant excitation three-phase voltage by means of an adjusting unit (18) that is connected in a rotationally fixed manner to the rotor (16) of the synchronous machine (17); and
- regulating the current intensity of the excitation current by means of the adjusting unit (18) wherein the constant excitation three-phase voltage is generated by regulating a supply of the main excitation machine (5) with a rectified auxiliary excitation three-phase current generated by an auxiliary excitation machine (9), wherein at least one regulating unit (27), which can be connected between the auxiliary excitation machine (9) and the main excitation machine (5), and which is designed to generate an auxiliary excitation direct current that can be supplied to the main excitation machine (5) by rectifying the auxiliary excitation three-phase current generated by the auxiliary excitation machine (9), and which is designed to regulate the current intensity of the auxiliary excitation direct current in such a manner that a magnetic flux generated between the rotor (7) and the stator (8) of the main excitation machine (5) is kept constant independently of the current intensity of the excitation current that can be supplied to the excitation winding of the rotor (16) of the synchronous machine (17).

5. Method according to Claim 4,
wherein at least one controllable rectifier unit is used as an adjusting unit (18).

## Revendications

1. Dispositif de régulation (25) destiné à un système excitateur sans balais (15) pour alimenter au moins un enroulement d'excitation d'un rotor (16) d'une machine synchrone (17), en particulier d'un turbogénérateur, avec un courant d'excitation, comprenant :
- au moins un dispositif de détection (26) conçu pour détecter l'intensité d'un flux magnétique généré entre un rotor (7) et un stator (8) d'une machine d'excitation principale (5) ou un paramètre lié à ce flux magnétique ;
- au moins une unité de régulation (27) qui peut être montée entre une machine d'excitation auxiliaire (9) et la machine d'excitation principale (5), qui est conçue pour générer un courant continu d'excitation auxiliaire à amener à la machine d'excitation principale (5) par redressement d'un courant triphasé d'excitation auxiliaire généré par la machine d'excitation auxiliaire (9) et qui est conçue pour réguler l'intensité du courant continu d'excitation auxiliaire de façon à maintenir constant un flux magnétique généré entre le rotor (7) et le stator (8) de la machine d'excitation principale (5) indépendamment de l'intensité du courant d'excitation à amener à l'enroulement d'excitation du rotor (16) de la machine synchrone (17) ; et
- au moins une unité de réglage (18) reliée solidairement en rotation à un arbre de rotor (6) de la machine synchrone (17) et montée entre le rotor (7) de la machine d'excitation principale (5) et l'enroulement d'excitation du rotor (16) de la machine synchrone (17), et qui est conçue pour générer le courant d'excitation par redressement d'une tension triphasée d'excitation générée par la machine d'excitation principale (5) et pour réguler l'intensité du courant d'excitation à amener au rotor (16) de la machine synchrone (17).

2. Dispositif de régulation (25) selon la revendication 1, dans lequel l'unité de réglage (18) comprend au moins une unité de redressement pouvant être commandée.

3. Système excitateur sans balais (15) destiné à l'alimentation d'au moins un enroulement d'excitation d'un rotor (16) d'une machine synchrone (17), en particulier d'un turbogénérateur, comprenant :
- au moins une machine d'excitation principale (5) exécutée en tant que machine électrique tournante à pôles extérieurs, qui comprend un rotor (7) pourvu d'enroulements de rotor (23) relié solidairement en rotation à un arbre de rotor (6) de la machine synchrone (17) ainsi qu'un stator (8) pourvu d'enroulements de pôle extérieur (20), les enroulements de rotor (23) pouvant être reliés de manière électriquement conductrice à l'enroulement d'excitation du rotor (16) de la machine synchrone (17) ;
- au moins une machine d'excitation auxiliaire (9) exécutée en tant que machine électrique à pôles intérieurs à excitation permanente, qui comprend un rotor (10) pourvu d'aimants permanents relié solidairement en rotation à l'arbre de rotor (6) de la machine synchrone (17) ainsi qu'un stator (11) pourvu d'enroulements de stator, les enroulements de stator pouvant être reliés de manière électriquement conductrice aux enroulements de pôle extérieur (20) de la machine d'excitation principale (5) ; et
- au moins un dispositif de régulation (25) selon la revendication 1 ou 2.

4. Procédé d'alimentation d'au moins un enroulement d'excitation d'un rotor (16) d'une machine synchrone (17), en particulier d'un turbogénérateur, avec un courant d'excitation, comprenant ces étapes :
- génération d'une tension triphasée d'excitation constante au moyen d'une machine d'excitation principale (5) dont le rotor (7) est relié solidairement en rotation au rotor (16) de la machine synchrone (17) ;
- génération du courant d'excitation par redressement de la tension triphasée d'excitation constante au moyen d'une unité de réglage (18) qui est reliée solidairement en rotation au rotor (16) de la machine synchrone (17) ; et
- régulation de l'intensité du courant d'excitation au moyen de l'unité de réglage (18),
- dans lequel la tension triphasée d'excitation constante est générée par régulation d'une alimentation de la machine d'excitation principale (5) avec un courant triphasé d'excitation auxiliaire généré par une machine d'excitation auxiliaire (9) qui est redressé, dans lequel au moins une unité de régulation (27) est montée entre la machine d'excitation auxiliaire (9) et la machine d'excitation principale (5), laquelle unité est conçue pour générer un courant continu d'excitation auxiliaire à amener à la machine d'excitation principale (5) par redressement du courant triphasé d'excitation auxiliaire généré par la machine d'excitation auxiliaire (9) et est conçue pour réguler l'intensité du courant continu d'excitation auxiliaire de façon à maintenir constant un flux magnétique généré entre le rotor (7) et le stator (8) de la machine d'excitation principale (5) indépendamment de l'intensité du courant d'excitation à amener à l'enroulement d'excitation du rotor (16) de la machine synchrone (17).

5. Procédé selon la revendication 4,
dans lequel au moins une unité de redressement pouvant être commandée est utilisée en tant qu'unité de réglage (18) .
